Europäisches Patentamt

European Patent Office

Office européen des brevets

(11) Veröffentlichungsnummer: **0 365 784**
**A2**

## (12) EUROPÄISCHE PATENTANMELDUNG

(21) Anmeldenummer: 89115674.7

(22) Anmeldetag: 25.08.89

(51) Int. Cl.5: **C08K 5/00 , C08J 5/24 , C08L 63/00**

(30) Priorität: 26.10.88 DE 3836409

(43) Veröffentlichungstag der Anmeldung:
02.05.90 Patentblatt 90/18

(84) Benannte Vertragsstaaten:
**DE FR GB IT SE**

(71) Anmelder: **FERROZELL-GESELLSCHAFT SACHS & CO. MBH**
**Theodor-Sachs-Strasse 1**
**D-8900 Augsburg-Inningen(DE)**

(72) Erfinder: **Hitzer, Hannelore, Dr.**
**Mittlerer Lechfeldweg 7**
**D-8900 Augsburg 21(DE)**
Erfinder: **Menhofer, Peter**
**Theodor-Sachs-Strasse 9b**
**D-8900 Augsburg 23(DE)**

(74) Vertreter: **Patentanwaltsbüro Cohausz & Florack**
**Schumannstrasse 97**
**D-4000 Düsseldorf 1(DE)**

(54) **Prepregs für selbstverlöschende Verbundwerkstoffe und Verfahren zu deren Herstellung.**

(57) Die vorliegende Erfindung betrifft Prepregs, welche durch Imprägnieren von Verstärkungsmaterialien aus Glas, Kohlenstoff, Kunststoff und/oder Zellstoff in Form von Fasern, Matten, Vliesen oder Geweben oder von Flächenstoffen auf Zellulosebasis mit einer Suspension von halogenfreien, Stickstoff und Phosphor enthaltenden Flammschutzmitteln in einer Lösung aus aromatischen, heterocyclischen und/oder cycloaliphatischen Epoxidharzen in nicht-kernhalogenierter oder in kernhalogenierter Form mit niedrigem Halogengehalt und aromatischen Polyaminen und/oder aliphatischen Amiden als Härter mit nachfolgender Trocknung erhältlich sind.

## Prepregs für selbstverlöschende Verbundwerkstoffe und Verfahren zu deren Herstellung

Die vorliegende Erfindung betrifft ein Verfahren zur Herstellung von Prepregs, welche für die Weiterverarbeitung zu selbstverlöschenden und hochkriechstromfesten Elektrolaminaten geeignet sind.

Es ist bekannt, daß die meisten Kunststoffe brennbar sind. Je nach Aufbau und Zusammensetzung bestehen jedoch erhebliche Unterschiede hinsichtlich Entflammbarkeit und Brandverhalten.

Bei den leichter entflammbaren Kunststoffen versucht man in der Praxis eine hinreichende Schwerbrennbarkeit durch den Zusatz flammhemmender Additive zu erreichen. Solche Zusatzstoffe sind beispielsweise halogenierte Kohlenwasserstoffe. Als flammhemmende Additive werden aber auch organische Phosphorverbindungen in Form halogenfreier oder halogenierter Phosphorsäureester eingesetzt. Derartige Verbindungen setzen aber nicht nur die Brennbarkeit herab, sondern können auch noch Weichmacherfunktionen ausüben, so daß sie die Wärmeformbeständigkeit herabsetzen. Die genannten flammhemmenden Aditive haben darüber hinaus den Nachteil, daß sie auch das elektrische Isolationsverhalten senken, insbesondere unter Feuchtigkeitseinfluß.

Es ist weiterhin bekannt, daß sich eine ausreichende Schwerbrennbarkeit über eine Halogenierung von Harzen erreichen läßt. Bei Verbundwerkstoffen werden daher halogenierte Bausteine des entsprechenden Harzsystems oder halogenierter Additive eingesetzt. Dies hat aber den Nachteil, daß sich im Brandfall Halogenwasserstoffe bilden, die zu mehr oder weniger schweren Schäden führen können.

Schließlich ist es bekannt, Verbindungen, welche Stickstoff und Phosphor enthalten, als Flammschutzmittel einzusetzen. Der Einsatz dieser Flammschutzmittel bewirkte jedoch immer ein Absinken der Glasumwandlungstemperatur unter 180°C und der Kriechstromfestigkeit.

Aus der DE-OS 27 43 680 sind Verbundwerkstoffe bekannt, welche aus einem Epoxidharz und einem Isocyanuratgruppierungen enthaltenden Verseifungsprodukt von oligomerisierten 4.4'-Diisocyanatodiphenylmethan mit Aminwasserstoff bestehen. Bei der Verseifung entsteht ein Amingemisch, welches auch Polyamine enthält. Aus der EP-Patentanmeldung 0 274 646 ist ebenfalls bekannt, für die Herstellung von Prepregs aromatische und heterocyclische Polyepoxidharze zu verwenden, die Polyamine enthalten. Diese bewirken das Entstehen besonders wärmeformbeständiger Hochtemperaturlaminate mit Glasumwandlungspunkten von 200 - 240°C. Es hat sich jedoch gezeigt, daß die Verwendung solcher Polyamine in Verbindung mit nicht-kernhalogenierten Epoxidharzsystemen nicht ausreicht, um selbstverlöschende Eigenschaften nach UL 94 in V1- oder VO-Qualität zu erreichen.

Wenn man in Verbindung mit den aus der DE-OS 27 43 680 und der EP-Patentanmeldung 0 274 646 bekannten Polyaminen kernhalogenierte Epoxidharze verwendet, läßt sich eine Selbstverlöschung nach UL 94 in V1- und VO-Qualität erreichen. Nachteilig ist jedoch, daß in diesem Fall die Wärmeformbeständigkeit und die Dimensionsstabilität auf das Niveau normaler, dem Stand der Technik entsprechender Werte absinken. Die Glasumwandlungspunkte liegen in diesem Falle bei 160 - 180°C.

Es ist auch aus dem Stand der Technik bekannt, selbstverlöschende Eigenschaften von Laminaten mit Glasumwandlungspunkten von 140°C durch den Einsatz kernhalogenierter Epoxidharze mit aliphatischen Amiden zu erreichen. Solche Verbundwerkstoffe haben den Nachteil, daß bei thermischer Überbelastung oder der Entsorgung solcher Systeme korrosive und toxische Spaltprodukte entstehen. Es ist ebenfalls bekannt, daß Verbundwerkstoffe auf der Basis kernhalogenierter Epoxidharze mit einem Gehalt von 20 Gew.-% Brom bezogen auf den Festkörpergehalt und aliphatischen Amiden oder aromatischen Aminen als Härter selbstverlöschende Eigenschaften nach UL 94 VO aufweisen. In diesem Fall erfüllt jedoch die Kriechstromfestigkeit nach DIN IEC 112 nur noch die Stufe CTI $\leq$ 200.

Verbundwerkstoffe, die nach DIN IEC 112 eine Kriechstromfestigkeit der Stufe $\leq$ 600 aufweisen, können nach dem derzeitigen Stand der Technik nur durch Absenkung des Halogenanteiles hergestellt werden. Solche Verbundwerkstoffe sind jedoch nicht mehr in die Brennbarkeitsstufe VO nach UL 94 einzuordnen.

Aufgabe der vorliegenden Erfindung ist es daher, Prepregs zur Verfügung zu stellen, welche die genannten Nachteile nicht aufweisen.

Die Aufgabe wird durch Prepregs gelöst, welche durch Imprägnieren von Verstärkungsmaterialien aus Glas, Kohlenstoff, Kunststoff und/oder Zellstoff in Form von Fasern, Matten, Vliesen oder Geweben oder von Flächenstoffen auf Zellulosebasis mit einer Suspension von halogenfreien, Stickstoff und Phosphor enthaltenden Flammschutzmitteln in einer lösung aus aromatischen, heterocyclischen und/oder cycloaliphatischen Epoxidharzen in nicht-kernhalogenierter oder in kernhalogenierter Form mit niedrigem Halogengehalt und aromatischen Polyaminen und/oder aliphatischen Amiden als Härter mit nachfolgender Trocknung erhältlich sind.

Die die Flammschutzmittel enthaltene Imprägnierlösung enthält 8 - 20 Gew.-%, vorzugsweise 10 - 13 Gew.-% Stickstoff und 0,5 - 5 Gew.-%, vorzugsweise 0,8 - 1,5 Gew.-% Phosphor. Bevorzugte Verbindungen sind halogenfreie Melaminsalze oder organische Phopshorsäureester oder deren Gemische. Als besonders geeignet haben sich hierbei Melamincyanurate, Melaminphosphate, Triphenylphosphat, Diphenylkresylphosphat und deren Gemische erwiesen.

Die Verwendung der aromatischen Polyamine als Härter führt zu Verbundwerkstoffen mit Glasumwandlungspunkten von 200 - 240 °C. Durch Einsatz aliphatischer Amide als Härter lassen sich Verbundwerkstoffe mit Glasumwandlungspunkten von 120 - 140°C erreichen. In beiden Fällen entstehen Produkte mit selbstverlöschenden Eigenschaften nach UL 94 VO, die bei thermischer Überbelastung keine toxischen Produkte abspalten. Die Kriechstromfestigkeit nach DIN IEC 112 Stufe CTI liegt bei ≤ 600.

Da der Einsatz der nach dem Stand der Technik bekannten Flammschutzmittel, welche Stickstoff und Phosphorverbindungen enthielten, immer zu einem Absinken der Glasumwandlungstemperatur, und der Kriechstromfestigkeit geführt hat, war es völlig überraschend festzustellen, daß durch den Einsatz der erfindungsgemäßen Suspension, welche halogenfreie Stickstoff- und Phosphorverbindungen als Flammschutzmittel enthält, für die Imprägnierung von Prepregs und daraus hergestellte Verbundwerkstoffe die genannten Nachteile vermieden wurden. Besonders gute Erfolge konnten durch den Einsatz von Melamincyanurat und/oder Melaminphosphat im Gemisch mit organischen Phosphorsäureestern erzielt werden, da hier Verbundwerkstoffe mit besonders hoher Dimensionsstabilität, Kriechstromfestigkeit und mit ausgezeichneten selbstverlöschenden Eigenschaften erhalten wurden.

Die erfindungsgemäßen Prepregs sind kostengünstig herzustellen. Da die aus diesen Prepregs hergestellten Verbundwerkstoffe bei thermischer Überbelastung keine toxischen und korrosiven Produkte abspalten, entsprechen sie auch vollständig den Forderungen des Gesundheits- und Umweltschutzes. Die Prepregs und die daraus hergestellten Verbundwerkstoffe können ohne Probleme und Belastungen für die Umwelt entsorgt werden.

Die aus den erfindungsgemäßen Prepregs hergestellten Verbundwerkstoffe kommen als hochtemperaturbeständige, dimensionsstabile, schwer entflammbare, mechanisch hoch beanspruchbare, toxisch unbedenkliche und kriechstromfeste Konstruktionswerkstoffe im Maschinenbau, der Elektrotechnik, dem Fahrzeug- und Flugzeugbau zur Anwendung.

In den folgenden Ausführungsbeispielen wird die Erfindung näher erläutert:

### Beispiel 1

53,13 Gewichtsteile eines Härtergemisches aus 1,3,5-Tris (3-amino-4-methylphenyl)-2,4,6-trioxohexahydrotriazin und heterocyclischen Polyaminen mit einer H-aktiv-Äquivalentmasse von 93,5 werden in 50 Gewichtsteilen einer 1:1 Mischung von Aceton und Methylethylketon gelöst. Zu dieser Lösung werden 125 Gewichtsteile einer 80 %-igen Lösung eines epoxidierten Novolaks (Epoxidäquivalentmasse : 176) in Aceton gegeben. Nach Zugabe von 20 Gewichtsteilen Diphenylkresylphosphat, 15 Gewichtsteilen Toluol sowie 30 Gewichtsteilen Melamincyanurat wird mit einem schnellaufenden Rührwerk gemischt, um eine gleichmäßige Suspension von Melamincyanurat in der Harz-/Härterlösung zu erreichen.

Mit dieser Suspension wird in Glasfilamentgewebe (Style 7628, 200 g/m²) imprägniert und in einem vertikalen Trockner bei Temperaturen bis 160 °C getrocknet.

Nach dem Verpressen der nach diesem Verfahren hergestellten Prepregs werden Laminate mit folgenden Eigenschaften erhalten:

Glasumwandlungstemperatur: 220°C
Brennbarkeit: UL 94VO
Kriechstromfestigkeit: CTI - 600

### Beispiel 2

Zu 133 Gewichtsteilen einer 75 %-igen Lösung eines nicht kernhalogenierten Bisphenol-A-Epoxidharzes (Epoxidäquivalentmasse : 380) in Methylethylketon werden 30 Gewichtsteile einer 10 %-igen Lösung von Dicyandiamid in Methylglykol, 20 Gewichtsteile Methylethylketon und 0,2 Gewichtsteile 2-Ethyl-4-methylimidazol gegeben. Nach Zugabe von 20 Gewichtsteilen Diphenylkresylphosphat und 35 Gewichtsteilen Melamincyanurat wird mit einem schnellaufenden Rührwerk gemischt, um eine gleichmäßige Suspension von Melamincyanurat in der Harz-/Härterlösung zu erreichen.

Mit dieser Suspension wird in Glasfilamentgewebe (Style 7628, 200 g/m²) imprägniert und in einem vertikalen Trockner bei Temperaturen bis 180 °C getrocknet.

Nach dem Verpressen der nach diesem Verfahren hergestellten Prepregs werden Laminate mit folgenden Eigenschaften erhalten:

Glasumwandlungstemperatur: 130 °C
Brennbarkeit: UL 94VO
Kriechstromfestigkeit: CTI - 600

### Beispiel 3

100 Gewichtsteile eines nicht kernhalogenierten Bisphenol-A-Epoxidharzes (Epoxidäquivalentmasse : 185), 33,5 Gewichtsteile 4,4'-Diaminodiphenylsulfon und 1,0 Gewichtsteile Bortrifluorid-Monoethylamin-Komplex werden in 25 Gewichtsteilen Methylethylketon und 25 Gewichtsteilen Methylglykol aufgelöst. Nach Zugabe von 40 Gewichtsteilen Melaminphosphat wird mit einem schnellaufenden Rührwerk gemischt, um eine gleichmäßige Suspension von Melaminphosphat in der Harz-/Härterlösung zu erreichen.

Mit dieser Suspension wird ein Glasfilamentgewbe (Style 7628, 200 g/m²) imprägniert und in einem vertikalen Trockner bei Temperaturen bis 180°C getrocknet.

Nach dem Verpressen der nach diesem Verfahren hergestellten Prepregs werden Laminate mit folgenden Eigenschaften erhalten:
Glasumwandlungstemperatur: 170°C
Brennbarkeit: UL 94 VO
Kriechstromfestigkeit: CTI - 600

## Ansprüche

1. Prepregs erhältlich durch Imprägnieren von Verstärkungsmaterialien aus Glas, Kohlenstoff, Kunststoff und/oder Zellstoff in Form von Fasern, Matten, Vliesen oder Geweben oder von Flächenstoffen auf Zellulosebasis mit einer Suspension von halogenfreien, Stickstoff und Phosphor enthaltenden Flammschutzmitteln in einer Lösung aus aromatischen, heterocyclischen und/oder cycloaliphatischen Epoxidharzen in nicht-kernhalogenierter oder in kernhalogenierter Form mit niedrigem Halogengehalt und aromatischen Polyaminen und/oder aliphatischen Amiden als Härter.

2. Prepregs gemäß Anspruch 1,
dadurch gekennzeichnet, daß die die Flammschutzmittel enthaltene Imprägnierlösung 8 - 20 Gew.-% Stickstoff und 0,5 - 5 Gew.-% Phosphor bezogen auf den Festkörpergehalt enthält.

3. Prepregs gemäß Anspruch 2,
dadurch gekennzeichnet, daß die Imprägnierlösung 10 - 13 Gew.-% Stickstoff und 0,8 - 1,5 Gew.-% Phosphor enthält.

4. Prepregs gemäß den Ansprüchen 1 - 3,
dadurch gekennzeichnet, daß die Flammschutzmittel halogenfreie Melaminsalze oder organische Phosphorsäureester oder deren Gemische sind.

5. Prepregs gemäß den Ansprüchen 1 - 4,
dadurch gekennzeichnet, daß die Flammschutzmittel Melamincyanurate, Melaminphosphate oder deren Gemische sind.

6. Verfahren zur Herstellung von Prepregs durch Imprägnieren von Verstärkungsmaterialien aus Glas, Kohlenstoff, Kunststoff und/oder Zellstoff in Form von Fasern, Matten, Vliesen oder Geweben oder von Flächenstoffen auf Zellulosebasis mit einer Lösung aus

a) aromatischen, heterocyclischen und/oder cycloaliphatischen Epoxidharzen in nicht-kernhalogenierter oder in kernhalogenierter Form mit niedrigem Halogengehalt und

b) aromatischen Polyaminen und/oder aliphatischen Amiden als Härter mit nachfolgender Trocknung,
dadurch gekennzeichnet, daß vor dem Imprägnieren halogenfreie, Stickstoff und phosphorenthaltende Flammschutzmittel in der Lösung aus Epoxidharz und Härter suspendiert werden.

7. Verfahren gemäß Anspruch 6,
dadurch gekennzeichnet, daß eine Flammschutzmittel enthaltene Imprägnierlösung mit einem Stickstoffgehalt von 8 - 20 Gew.-% und einem Phosphorgehalt von 0,5 - 5 gew.-% bezogen auf den Festkörpergehalt eingesetzt wird.

8. Verfahren gemäß Anspruch 7,
dadurch gekennzeichnet, daß eine Flammschutzmittel enthaltene Imprägnierlösung mit einem Stickstoffgehalt von 10 - 13 Gew.-% und einem Phosphorgehalt von 0,8 - 1,5 Gew.-% eingesetzt wird.

9. Verfahren gemäß einem der Ansprüche 6 - 8,
dadurch gekennzeichnet, daß als Flammschutzmittel halogenfreie Melaminsalze oder organische Phosphorsäureester oder deren Gemische eingesetzt werden.

10. Verfahren gemäß einem der Ansprüche 6 - 9,
dadurch gekennzeichnet, daß als Flammschutzmittel Melamincyanurate und/oder Melaminphosphate eingesetzt werden.

11. Verwendung der Prepregs gemäß einem der Ansprüche 1 - 5 für die Herstellung selbstverlöschender und hoch-kriechstromfester Elektrolaminate mit Glasumwandlungspunkten von 130 - 240°C.